# EUROPEAN PATENT APPLICATION

(11) **EP 0 905 604 A2**
(43) Date of publication of application: **31.03.1999**
(21) Application number: 98307573.0
(22) Date of filing: 17.09.1998
(51) Int. Cl.: G06F 1/18

(54) **Cableless interface connection**

(30) Priority: 30.09.1997 US 940582
(71) Applicant: Compaq Computer Corporation, Houston Texas 77070 (US)
(72) Inventor: Bolognia, David F., Kingwood, Texas 77345 (US); Gebara, Ghassan R., Spring, Texas 77379 (US)
(74) Representative: Brunner, Michael John

(57) **Abstract**

A computer system has a motherboard, a power supply and a first circuit board. The motherboard has power consuming circuitry. A first circuit board is configured to form a rigid connection with the motherboard and route power from the power supply to the motherboard through the rigid connection.

## Description

The invention relates to a cableless interface connection for a computer system.

The central processing circuitry of a personal computer system typically is located on a specialized system board called a motherboard. This circuitry typically has to communicate with other circuitry located on system boards separate from the motherboard. As a result, these other system boards are electrically connected to the motherboard.

For example, a board called a riser board has expansion slot connectors for receiving removable circuit cards (e.g., ISA/EISA and PCI cards). The riser board typically plugs into the motherboard to electrically connect the removable circuit cards to circuitry on the motherboard. A board called a peripheral backplane board has connectors that receive corresponding connectors of mass storage devices (e.g., IDE, SCSI and floppy disk drive devices) and, to establish communication between the mass storage devices and circuitry on the motherboard, cables extend from the peripheral backplane board to the motherboard.

The circuitry on the motherboard also requires electrical power to operate. Thus, power supply cables typically extend from a power supply backplane board to the motherboard. Because circuitry on the other system boards need power as well, typically other power supply cables extend from the power supply board to these boards. Power supply cables also typically extend to peripheral devices, such as a floppy disk drive, a hard disk drive and a CD-ROM drive.

The system boards are typically mounted to and encased by a chassis which places limits on where the cables may be routed. For example, inside the chassis, cables typically compete for space with large central processing unit (CPU), heatsinks and tall memory modules that extend upwardly from the motherboard. To ensure sufficient air flow around the heat sinks, system designers typically take into account the space required by the cables when designing the chassis.

Typically, over the lifetime of the computer system, service is required to perform upgrades and/or repairs. For example, additional memory may be installed on the motherboard or the motherboard may need to be replaced. Typically to install, remove or service a system board, cables have to be disconnected and then reconnected.

In general, in one aspect, the invention features a computer system that has a motherboard, a power supply and a first circuit board. The motherboard has power consuming circuitry. A first circuit board is configured to form a rigid connection with the motherboard and route power from the power supply to the motherboard through the rigid connection.

The advantages of the invention may include one or more of the following. Cable clutter is reduced. Air flow around heat sinks is improved. More space is provided for tall components (e.g., heat sinks and memory modules) of the motherboard. The computer system costs less and is more reliable. The computer system is easier to service. The computer system is easier to manufacture. The motherboard may be quickly accessed and serviced. The size of a chassis is minimized. Full length PCI and full length EISA/ISA cards may be accommodated by the computer.

Implementations of the invention may include one or more of the following. The rigid connection may include a first rigid connector (e.g., an edge of the motherboard) of the motherboard and a second rigid connector of the first circuit board. The first rigid connector may be configured to mate with the second rigid connector. The first circuit board may have at least one conductive trace configured to carry the power. This conductive trace may have a predetermined voltage level.

The computer system may also have a second circuit board (e.g., a peripheral backplane board) that has power consuming circuitry, and the motherboard may be configured to route a portion of the power to the second circuit board. The motherboard and the second circuit board may be configured to form a second rigid connection and route the portion of the power through the second rigid connection. The second circuit board may have a third rigid connector, and the motherboard may have a fourth rigid connector that is configured to mate with the third rigid connector to form the second rigid connection.

In general, in another aspect, the invention features a computer system that includes a power supply, a motherboard and a link. The link is configured to transfer power from the power supply to the motherboard. The link does not include a flexible connector.

In general, in another aspect, the invention features a computer system that includes a peripheral backplane board that is configured to carry peripheral communication signals. The computer system has a motherboard that is configured to form a rigid connection with the peripheral backplane board and route the peripheral communication signals through the rigid connection.

In general, in another aspect, the invention features a computer system that has a motherboard, an expansion card backplane board, a peripheral backplane board and a power supply backplane board. The motherboard, expansion card backplane board, the peripheral backplane board and the power supply backplane board are electrically connected together without using a flexible connector.

In general, in another aspect, the invention features a method for use with a computer system. The computer system has a motherboard having power consuming circuitry and a power supply. The method includes forming a rigid connection between a first circuit board and the motherboard and routing power from the power supply to the motherboard through the rigid connection.

In general, in another aspect, the invention features a method for use with a computer system having a motherboard and a power supply. The method includes transferring power from the power supply to the motherboard without using a flexible connector.

In general, in another aspect, the invention features a method for use with a computer system having a peripheral backplane board that is configured to carry peripheral communication signals and a motherboard. The method includes forming a rigid connection between the peripheral backplane board and the motherboard and routing the peripheral communication signals through the rigid connection.

In general, in another aspect, the invention features a method for use with a computer system The method includes electrically connecting a motherboard, an expansion card backplane board, a peripheral backplane board and a power supply backplane board together without using a flexible connector.

Other advantages and features will become apparent from the following description in conjunction with the accompanying drawings, in which:

Fig. 1 is a perspective view of a computer system.

Fig. 2 is a cross-sectional view taken along line 2-2 of Fig. 1.

Figs. 3 and 4 are views of flexible connectors

Fig. 5 is a top view of rigid connectors.

Fig. 5A is a cross-sectional view taken along line 5A-5A of Fig. 5.

Fig. 6 is an exploded perspective view of the computer system.

Figs. 7, 8 and 9 are views of system boards of the computer system.

Fig. 10 is an electrical schematic diagram of the computer system.

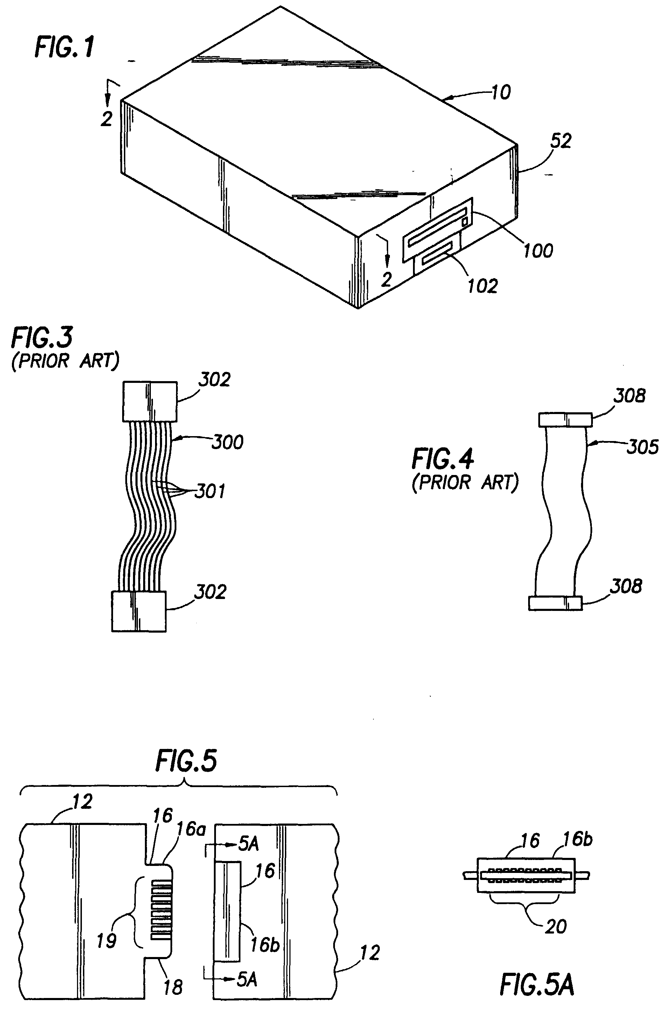

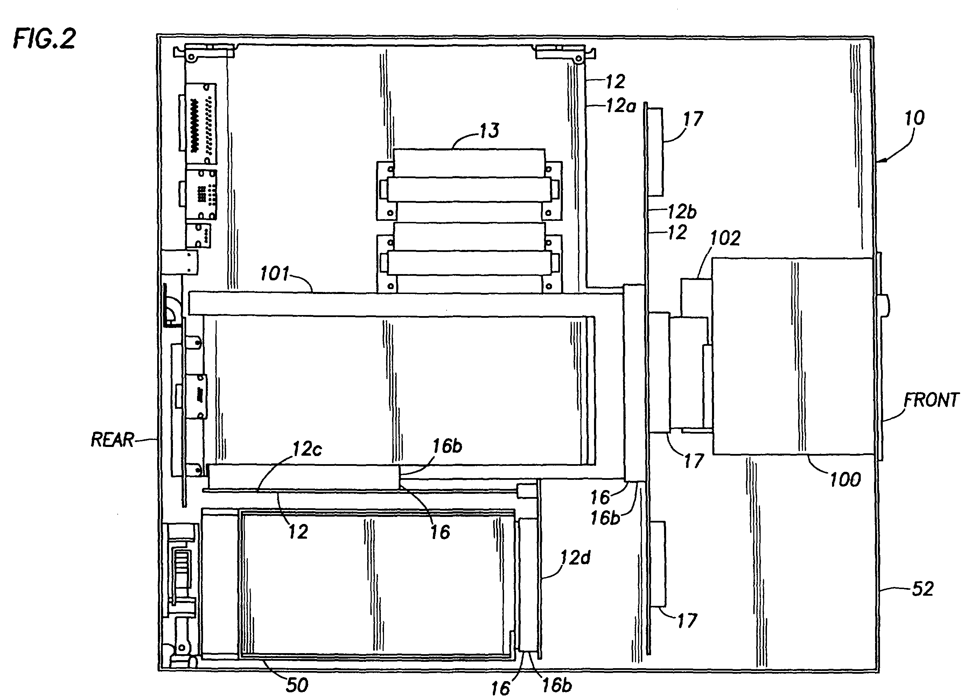

Referring to Figs. 1, 2 and 6 system boards 12 of a computer system 10 are constructed and arranged in a manner to form a cableless network for carrying power and communication signals among the boards 12. To accomplish this, the boards 12 are arranged so that adjacent, orthogonal boards 12 plug into each other and are constructed so that traditional cabling between the boards 12 is replaced by circuitry of the boards 12.

Unlike the system 10, traditional computer systems have extensively used flexible connectors (e.g. cables) to electrically connect system boards together. For example, one type of cable, a power supply harness cable 3 00 (see Fig. 3), has traditionally been used to electrically connect system boards to a power supply backplane board so that the boards 12 have power to operate. In this manner, one end plug 302 of the cable 300 is plugged into the power supply backplane board and the other end plug 302 of the cable 300 is plugged into the system board. Similarly, the cable 300 has also typically been used to extend power to a peripheral device, such as a floppy disk drive, a hard drive or a CD-ROM drive. Flexible wires 301 extend between the end plugs 302 and provide flexibility in running and connecting the cable 300. The wires 301 include, for example, DC voltage supply wires and ground wires.

Referring to Fig. 4, another type of cable, a ribbon cable 305, has typically been used to electrically connect bus communication signals (e.g., signals from a Small Communication Systems Interface (SCSI) bus or an Intelligent Electronics Device (IDE) bus) of a motherboard to a backplane board (e.g., a riser board or a peripheral device backplane board) In this manner, the ribbon cable 305 has one end plug 308 that connects to the motherboard, and another end plug 308 that connects to the backplane board. A plastic web of flexible wires 305 extends between the two end plugs 308. Like the harness cable 300, the ribbon cable 305 provides flexibility in running and connecting the cable 305.

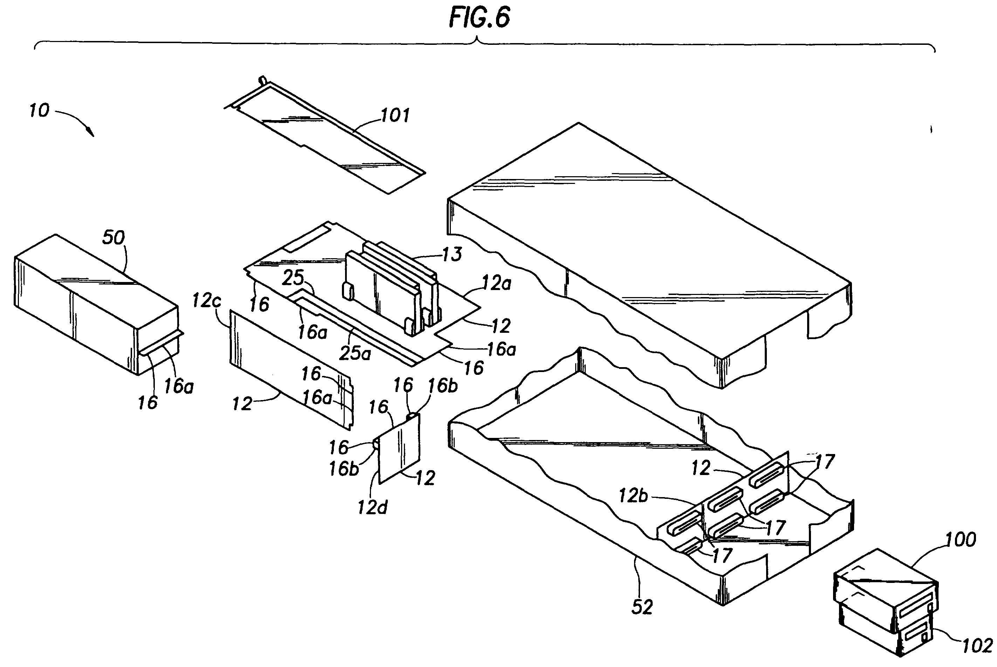

Referring to Figs. 2 and 6, unlike the traditional computer systems that use extensive cabling to electrically connect system boards together, the system boards 12 of the computer system 10 are constructed and arranged to form a cableless network for distributing power and communication signals throughout the system 10. This cableless network is formed from electrical traces on the system boards 12 and rigid, plug-type connectors 16 (see Fig. 2) of the boards 12. These rigid connectors 16 mechanically and electrically connect the boards 12 together.

As a result of the cableless network, cable clutter inside a chassis 52 (see Fig. 1) of the system 10 is reduced. Thus, memory modules or processors can be easily accessed, and the absence of cables permits an unrestricted air flow around tall memory modules and large CPU heatsinks.

In a typical computer system, the removal ofa system board involves disconnecting cables from the board before the board is removed. Similarly, in typical computer systems, the installation of a system board includes connecting cables to the board. However, because ofthe cableless network ofthe system 10, the boards 12 can be removed from and installed in the system 10 without disconnecting and connecting cables. The connection of cables to boards and peripheral devices typically consumes a considerable amount of time. If the end plug of the cable is not keyed, time must be spent ensuring that the end plug is in the proper orientation before connecting the end plug. Otherwise, a peripheral device or system board failure may occur. Thus, as a result the cableless network, less time is spent servicing boards/peripheral devices of the system 10.

With the cableless network, the boards 12 and peripheral devices can be placed on removable trays. In this manner, to remove a board or peripheral device, the tray on which the board or device is mounted is pulled from the chassis 52. When this occurs, the board or device on the tray is automatically unplugged from its electrical connections with boards 12 of the rest of the system 10.

Referring to Figs. 2 and 6, besides forming a cableless distribution network, the boards 12 are also constructed to carry out typical functions of the computer system 10. For example, the system boards 12 include a motherboard 12a which is mounted to the bottom of the chassis 52. In other arrangements, the motherboard 12a is mounted to a removable tray that slides into a rear of the chassis 52.

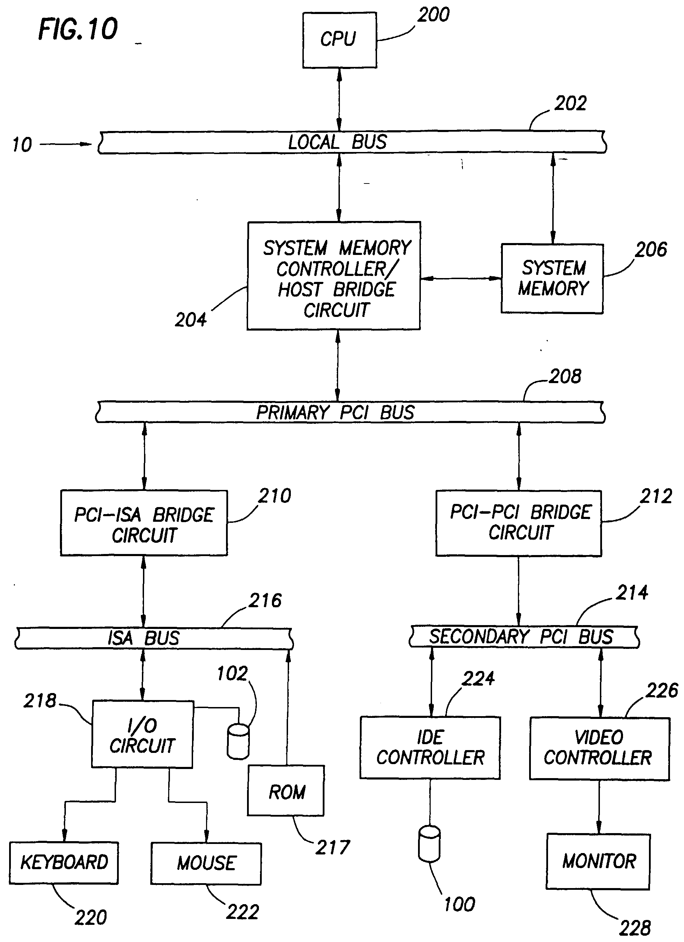

The motherboard 12a includes circuitry (e.g., memory modules 13 that extend upwardly from the motherboard 12a and a central processing unit (CPU) 200 (see Fig 10)) that needs to communicate with other system boards 12, such as a peripheral backplane board 12b and an expansion card riser board 12c. To accomplish this, the motherboard 12a is constructed to form a plug-type connection with the upwardly extending peripheral backplane board 12b and with the upwardly extending riser board 12c.

The peripheral backplane board 12b is orthogonal to the motherboard 12a, and the front face of the peripheral backplane board 12b faces mass storage devices (e.g., a floppy disk drive 100 and a CD-ROM drive 102). The rear face of the backplane board 12b faces the motherboard 12a. The mass storage devices plug into the front face of the peripheral backplane board 12b, and circuitry on the motherboard 12a communicates with these mass storage devices through the motherboard's plug-type connection with the peripheral backplane board 12b, i.e., through the set of mating connectors 16 that connect the motherboard 12a and the backplane board 12b together. In this manner, for example, SCSI, IDE and floppy drive signals pass through the set of mating connectors 16 that connect the two boards 12a and 12b together.

The riser board 12c extends from near the rear of the chassis 52 toward the front of the chassis 52, and the faces of the riser board 12c face opposite sides of the chassis 52. Through the riser board's plug-type connection with the motherboard 12a, expansion cards 101 plugged into expansion slots of the riser board 12 can communicate with circuitry of the motherboard 12a and the mass storage devices.

The system boards 12 are connected to each other not only for purposes of communication but also to form a power distribution network. In this manner, the boards 12 cooperate to distribute, or transfer, power from a power supply 50 throughout the system 10 without using cables. The power supply 50, located near the rear of the chassis 52, is constructed to form a plug-type connection with an upwardly extending power supply backplane board 12d that faces the front and rear of the chassis 52. Typically, cables extend from the power supply backplane board 12d to distribute power to the system boards 12. However, in the system 10, the riser board 12c is also constructed to form a rigid, plug-type connection with the power supply backplane board 12d, and all power leaving the power supply backplane board 12d goes through this rigid connection and onto the riser board 12c.

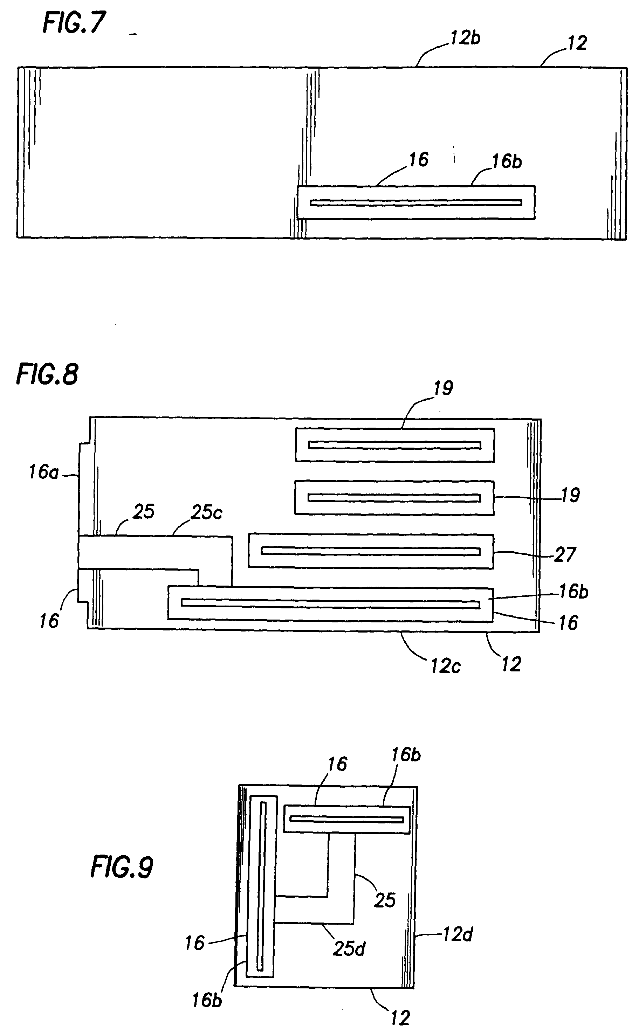

The power distribution network uses power buses 25 that are formed on the boards 12. Each power bus 25 includes conductive traces that carry different DC supply voltage levels (e.g., 3.3 V, 5 V, -5V and 12V levels). In this manner, the power supply backplane board 12d (see Fig. 9) has a bus 12c that is constructed to carry power from the power supply 50 to the riser board 12c. The riser board 12c (see Fig. 8) has a power bus 25c to transfer supply power to the motherboard 12a, and the motherboard 12a has a power bus 25a (see Fig. 6) to transfer power to the peripheral backplane board 12b (see Fig. 7). All of the power passes through the rigid connections formed between the boards 12, i.e., all of the power passes between adjacent boards 12 through sets of mating connectors 16 that connect the adjacent boards 12 together.

Referring to Fig 5, the plug-type connections between the system boards 12 are formed by a set of two, mating rigid connectors 16 (e.g., a card edge connector and a mating card edge). Because the rigid connectors 16 are part of the system boards 12, the rigid connectors 16 consume a minimal amount of space. Each set of connectors 16 includes a male connector 16a (part of one system board) that is configured to mate with a female connector 16b (part ofthe other, mating system board). Often called a gold finger connector, the male connector 16a is formed from a plug extension 18 of the board 12 and conductive traces, or fingers 19, that are located on the top and bottom faces of the plug extension 18. The female connector 16b has internal spring contacts 20 (see Fig. 5A) that are configured to contact the fingers 19 when the connectors 16a and 16b are plugged together. Other rigid connectors 16 may be used.

Thus, the construction and arrangement of the system boards 12 establish both a power supply network and a communication network for the computer system 10. All of the signals in these networks pass through the connectors 16.

The plug-type connections between the boards 12 also allows quick assembly and disassembly of the system 10. For example, the motherboard 12a and riser board 12c may be easily removed from the chassis 52 by pulling on the motherboard 12a to dislodge the motherboard 12a from the peripheral backplane board 12b and disconnect the riser board 12c from the power supply backplane board 12d.

In some arrangements, the motherboard 12a and the power supply 50 are mounted on a tray that slides into the rear of the chassis, and the peripheral backplane board 12b is permanently mounted to the chassis. For these arrangements, the motherboard 12a and power supply 50 are removed from the chassis by simply pulling the tray from the chassis, and the motherboard 12a and power supply 50 are installed by pushing the tray into the chassis.

Referring to Fig. 10, the motherboard 12a has at least one central processing unit (CPU) 200, a system memory controller/host bridge circuit 204 and a system memory 206, all of which are connected to a local bus 202. The circuit 204 interfaces the local bus 202 to a primary Peripheral Component Interconnect (PCI) bus 208. Also on the motherboard 12a is a PCI-PCI bridge circuit 212 that interfaces the bus 208 to circuitry of one or more expansion cards through a secondary PCI bus 214. The bus 214 is located on the motherboard 12a and is extended to PCI expansion cards through one or more expansion slot connectors 19 (see Fig. 8) on the riser board 12c. Also located on the motherboard 12a are an IDE controller 224 and a video controller 226 which are coupled to the PCI bus 214. In some arrangements, the controller 224 is located on an expansion card, and in some arrangements, the video controller 226 is located on an expansion card. The controller 224 controls operation of the IDE devices, such as the CD-ROM drive 100. The video controller 226 drives a monitor 228.

Also located on the motherboard 12a is a PCI-Industry Standard Architecture (ISA) bridge circuit 210. The circuit 210 interfaces the PCI bus 208 to an ISA bus 216 which is extended to ISA expansion cards through one or more ISA slot connectors 27 (see Fig. 8) on the riser board 12c. Connected to the ISA bus 216 are an input/output (I/O) circuit 218 and a read only memory (ROM) 217. The I/O circuit 218 receives input from input/output devices, such as a keyboard 220 and a mouse 222. The I/O circuit 218 also controls operations of the floppy disk drive 102. In some arrangements, all or part of the circuitry connected to the ISA bus 216 are located on expansion cards.

## Claims

1. A computer system comprising:
a power supply;
a motherboard; and
a non-flexible link configured to transfer power from the power supply to the motherboard.

2. A computer system according to claim 1, wherein the link comprises
a circuit board configured to form a rigid connection with the motherboard and route power from the power supply to the motherboard through the rigid connection.

3. The computer system of claim 2, wherein the link includes a first rigid connector on the motherboard and a mating second rigid connector on the circuit board.

4. The computer system of claim 3, wherein the first rigid connector comprises an edge of the motherboard.

5. The computer system of any of claims 2 to 4, wherein the circuit board has at least one conductive trace configured to carry the power.

6. The computer system of claim 5, wherein said at least one conductive trace has a predetermined voltage level.

7. The computer system of claim 1, further comprising:
a circuit board, and
wherein the motherboard is configured to transfer some of the power to the circuit board.

8. The computer system of any of claims 2 to 6, further comprising:
a second circuit board having power consuming circuitry, and
wherein the motherboard is configured to route a portion of the power to the second circuit board.

9. The computer system of claim 7 or claim 8, wherein the motherboard and the circuit board or second circuit board are configured to form a second rigid connection and route the power through the second rigid connection.

10. The computer system of any of claims 7 to 9, wherein
the circuit board or second circuit board has a third rigid connector, and
the motherboard has a fourth rigid connector configured to mate with the third rigid connector to form the second rigid connection.

11. The computer system of any of claims 7 to 10, wherein the circuit board or second circuit board comprises a peripheral backplane board.

12. The computer system of claim 11, wherein the peripheral backplane board comprises a SCSI backplane board.

13. The computer system of any of claims 1 to 10, wherein the link includes a circuit board having a slot configured to receive an expansion card.

14. A computer system comprising:
a peripheral backplane board configured to carry peripheral communication signals; and
a motherboard configured to form a rigid connection with the peripheral backplane board and route the peripheral communication signals through the rigid connection

15. The computer system of claim 14, wherein the rigid connection includes a first rigid connector on the backplane board and a second rigid connector on the motherboard.

16. A computer system comprising:
a motherboard;
an expansion card backplane board;
a peripheral backplane board; and
a power supply backplane board,
wherein the motherboard, expansion card backplane board, the peripheral backplane board and the power supply backplane board are electrically connected together using non-flexible connectors.
